(19) **Europäisches Patentamt / European Patent Office / Office européen des brevets**

(11) **EP 3 715 487 A1**

(12) **EUROPEAN PATENT APPLICATION**
published in accordance with Art. 153(4) EPC

(43) Date of publication:
**30.09.2020 Bulletin 2020/40**

(21) Application number: **18881456.0**

(22) Date of filing: **02.08.2018**

(51) Int Cl.:
***C22B 23/00*** (2006.01)      ***C22B 3/08*** (2006.01)
***C22B 3/44*** (2006.01)

(86) International application number:
**PCT/JP2018/029091**

(87) International publication number:
**WO 2019/102652 (31.05.2019 Gazette 2019/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.11.2017   JP 2017226237**

(71) Applicant: **Sumitomo Metal Mining Co., Ltd.**
**Tokyo 105-8716 (JP)**

(72) Inventors:
• **SAITO Daisuke**
  **Niihamashi**
  **Ehime 792-8555 (JP)**

• **OISHI Takao**
  **Niihamashi**
  **Ehime 792-8555 (JP)**
• **TANAKA Masahiro**
  **Niihamashi**
  **Ehime 792-8555 (JP)**
• **KITAZAKI Toru**
  **Niihamashi**
  **Ehime 792-8555 (JP)**

(74) Representative: **Müller-Boré & Partner**
**Patentanwälte PartG mbB**
**Friedenheimer Brücke 21**
**80639 München (DE)**

(54) **DEZINCIFICATION SYSTEM FOR AQUEOUS NICKEL SULFATE SOLUTIONS, AND METHOD FOR SAME**

(57)    Purpose of the present invention is to provide a dezincification system of a nickel sulfate aqueous solution capable of maintaining a zinc grade in a nickel/cobalt mixed sulfide stably low. A dezincification system of a nickel sulfate aqueous solution for removing zinc from the nickel sulfate aqueous solution containing cobalt and zinc as impurity by using a hydrogen sulfide gas, comprising: a reaction vessel for storing the nickel sulfate aqueous solution; a hydrogen sulfide supply means for supplying the hydrogen sulfide gas to the reaction vessel; a zinc concentration detection means for measuring a zinc concentration (Z) contained in the nickel sulfate aqueous solution; a nickel concentration detection means for measuring a nickel concentration (N) contained in the nickel sulfate aqueous solution; a controller for controlling the hydrogen sulfide supply means to adjust an amount (P) of the hydrogen sulfide gas supplied to the reaction vessel, wherein the controller further comprises a control index calculation means for calculating a ratio of the zinc concentration (Z) contained in the nickel sulfate aqueous solution with respect to the nickel concentration (N) contained in the nickel sulfate aqueous solution as a control index (W=Z/N), the control index (W) calculated by the control index calculation means is adjusted to be maintained within a control reference value ($Q1 \leqq W \leqq Q2$).

EP 3 715 487 A1

**(Cont. next page)**

100

90

Controller

40

Q

Control reference value Q
= 0.30% to 0.35% by weight

H₂S supply
means

Comparison

Control index calculation
means W = Z/N

91

W

Supply amount P

Neutralized final solution

50

Concentration Z

Concentration N

Reaction vessel

10

Zn concentration
detection means

Ni concentration
detection means

20

$ZnSO_4 + H_2S \longrightarrow ZnS + H_2SO_4 \cdots [1]$
$NiSO_4 + H_2S \longrightarrow NiS + H_2SO_4 \cdots [2]$

Zinc sulfide

Mother liquor for nickel recovery

**FIG.2**

**Description**

Background of the Invention

Field of the Invention

The present invention relates to a dezincification system for removing an infinitesimal amount of zinc included in a nickel sulfate aqueous solution containing cobalt, and to a method for same. This application is based upon and claims the benefit of priority from Japanese Patent Application No. 2017-226237 filed on November 24, 2017 in Japan, which is incorporated by reference herein.

Description of Related Art

As disclosed in Patent Literature 1 as a dezincification treatment plant, a method for operating a dezincification plant, and a hydrometallurgical process of nickel oxide ore, recently, as a hydrometallurgical process of nickel oxide ore, High Pressure Acid Leaching (HPAL) method using sulfuric acid is attracting attention. From first place, a hydrometallurgical process does not include a pyrometallurgical process such as drying and roasting process, and comprises consistent wet process, so it is advantageous in cost and energy. In addition, according to the hydrometallurgical process using the HPAL method, it is also advantageous in a point that it is possible to obtain nickel/cobalt mixed sulfide in which nickel grade is concentrated until about 50% by weight. Therefore, a process for recovering valuable metals from low grade nickel oxide ores by the hydrometallurgical process using HPAL method is put to practical use commercially.

A method for recovering nickel/cobalt mixed sulfide by adding a sulfurizing agent such as a hydrogen sulfide gas to a nickel sulfate aqueous solution (hereinafter, referred to as "mixed nickel/cobalt sulfate aqueous solution" or simply as "sulfuric acid aqueous solution") containing cobalt leached from nickel oxide ore by HPAL method is used generally.

The nickel/cobalt mixed sulfide recovered as such is used as a raw material for purifying high purity electrolytic nickel or nickel sulfate. High purity means a quality in which a content of impurities such as zinc is controlled to a predetermined level or less. Therefore, the nickel/cobalt mixed sulfide, in which a quality is assured to a range of low zinc grade, in other words, predetermined standard (zinc grade $\leqq$ 250 ppm by weight), is required.

In a dezincification process, a general process control to remove an infinitesimal amount of zinc in the sulfuric acid aqueous solution, by reacting the mixed nickel/cobalt sulfate aqueous solution with the hydrogen sulfide gas under a certain pressure, is required. Here, the required process control is a control for maintaining a zinc concentration in the sulfuric acid aqueous solution to a certain value or less.

Here, the aqueous solution after the dezincification process is analyzed and controlled to maintain a zinc concentration to a certain value or less. However, even if a zinc concentration is controlled to be maintained to a certain value or less, there is a problem that a zinc grade in the nickel/cobalt mixed sulfide changes and exceeds a control criterion. Therefore, a new quality control method capable of controlling a zinc grade in the nickel/cobalt mixed sulfide more stably is required.

In contrast, in a conventional quality control, the aqueous solution (final solution) after the dezincification process is analyzed (final solution analysis), for example at two hours intervals, and it was controlled by maintaining a zinc concentration in the final solution to a certain value or less. In other words, a quality control to feedback a result of the final solution analysis was performed. However, it was difficult to spread the quality control to the product, only by maintaining a zinc concentration of the final solution to a certain value or less.

As such, by a conventional quality control, there was a risk that off-grade goods will be generated, when a zinc grade in the product of nickel/cobalt mixed sulfide is changed to a degree to be deviated from a range of standard ($\leqq$ 250 ppm by weight). Therefore, when calculating on a variation of quality, it was necessary to set a target quality higher to have a margin to keep within the quality standard. As a result, there was a circumstance that it had to be somewhat biased to a direction of excess quality, in order to maintain a zinc grade in the product of nickel/cobalt mixed sulfide within an acceptable range.

By excess quality, it will be disadvantageous in cost by responding excessively to inhibit a defect, even if a cause of the defect is in a level that it will not be a problem. Concretely, in the dezincification process in a process for producing the nickel/cobalt mixed sulfide from low grade nickel oxide ore, even if a zinc concentration in the sulfuric acid aqueous solution which will be a cause of defect is in a level that it will not be a problem, excessive amount of hydrogen sulfide gas exceeding minimum necessary amount for removing zinc was blown into the sulfuric acid aqueous solution usually.

As a result, by the hydrogen sulfide gas blown in excessively, nickel to be recovered is also removed together with zinc. Thus, in a conventional quality control system, as a result of thoroughly performing quality control to decrease a defect rate of product with respect to a zinc grade, it was inevitable to generate a considerable amount of nickel loss.

Patent Literature 1: JP 2013-185178

Summary of the Invention

Here, the present invention is invented to solve such circumstances, and a purpose of the present invention is to provide a dezincification system of a nickel sulfate aqueous solution capable of maintaining a zinc grade in a nickel/cobalt mixed sulfide stably low, in a dezincification process for removing zinc from the nickel sulfate aqueous solution containing an infinitesimal amount of zinc by using a hydrogen sulfide gas, and a method for same.

The inventors have focused on a fact that a zinc grade of a nickel/cobalt mixed sulfide changes in conjunction with not only a change of zinc concentration but also with a change of nickel concentration in a mixed nickel/cobalt sulfate aqueous solution, and found that it is effective to add nickel concentration also to a control index, in which only zinc concentration was applied generally conventionally, as a factor for determining a zinc grade of a product intended, and completed the present invention.

In order to solve the above problems, one embodiment of the present invention is a dezincification system (100) of a nickel sulfate aqueous solution for removing zinc from the nickel sulfate aqueous solution containing cobalt and zinc as impurity by using a hydrogen sulfide gas, comprising:

> a reaction vessel (50) for storing the nickel sulfate aqueous solution;
> a hydrogen sulfide supply means (40) for supplying the hydrogen sulfide gas to the reaction vessel (50);
> a zinc concentration detection means (10) for measuring a zinc concentration (Z) contained in the nickel sulfate aqueous solution;
> a nickel concentration detection means (20) for measuring a nickel concentration (N) contained in the nickel sulfate aqueous solution;
> a controller (90) for controlling the hydrogen sulfide supply means (40) to adjust an amount (P) of the hydrogen sulfide gas supplied to the reaction vessel (50),
> wherein the controller (90) further comprises a control index calculation means (91) for calculating a ratio of the zinc concentration (Z) contained in the nickel sulfate aqueous solution with respect to the nickel concentration (N) contained in the nickel sulfate aqueous solution as a control index (W=Z/N),
> the control index (W) calculated by the control index calculation means (91) is adjusted to be maintained within a control reference value ($Q1 \leqq W \leqq Q2$).

In addition, in other embodiment of the present invention, it is preferable to maintain a control reference range of the control index (W=Z/N) to a ratio of 0.30% to 0.35% by weight.

In addition, other embodiment of the present invention is a dezincification method of a nickel sulfate aqueous solution for removing zinc from the nickel sulfate aqueous solution containing cobalt and zinc as impurity, which is high pressure acid leached (HPAL) using sulfuric acid in a hydrometallurgical process of nickel oxide ore, by using a hydrogen sulfide gas,

wherein a ratio of a zinc concentration (Z) contained in the nickel sulfate aqueous solution with respect to a nickel concentration (N) contained in the nickel sulfate aqueous solution is applied to a control index (W=Z/N), and

the control index (W=Z/N) is maintained within a control reference value ($Q1 \leqq W \leqq Q2$) by adjusting an amount (P) of the hydrogen sulfide gas supplied to a reaction vessel.

According to the present invention, a dezincification system of a nickel sulfate aqueous solution capable of maintaining a zinc grade in a nickel/cobalt mixed sulfide stably low, and a method for same, are provided.

Brief Description of the Drawings

> Fig. 1 is a simple flow chart for explaining a process for producing a nickel/cobalt mixed sulfide from low grade nickel oxide ore, as a technical premise of the present invention.
> Fig. 2 is a block diagram for explaining a dezincification system of a nickel sulfate aqueous solution (hereinafter, referred to as "present system") relating to one embodiment of the present invention.
> Fig. 3 is a potential-pH diagram of $M-S-H_2O$ system for explaining an easiness to produce a metal sulfide with respect to a reducing atmosphere.
> Fig. 4 is a graph illustrating a relation of nickel loss with respect to a zinc grade in the nickel/cobalt mixed sulfide obtained in a sulfurizing process of Fig. 1.
> Fig. 5 is a flow chart for explaining the process of Fig. 1 in more detail.

Detailed Description of the Invention

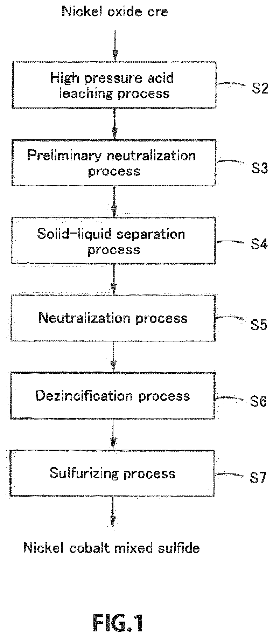

Hereinafter, explaining about a dezincification system of a mixed nickel/cobalt sulfate aqueous solution (present system) relating to one embodiment of the present invention, and a method for same (present method), by referring to the drawings. In addition, the present invention should not be limited by the following examples, and it can be modified optionally within a scope not deviating from a gist of the present invention. At first, before explanation of the present method, as its technical premise, explaining about a hydrometallurgical process of nickel oxide ore (hereinafter, referred to as simply "hydrometallurgical process") including the present method. This hydrometallurgical process is a hydrometallurgical process for recovering nickel and cobalt from nickel oxide ore by leaching, for example by HPAL method. Explaining from a technical premise of the present invention by using Fig. 1.

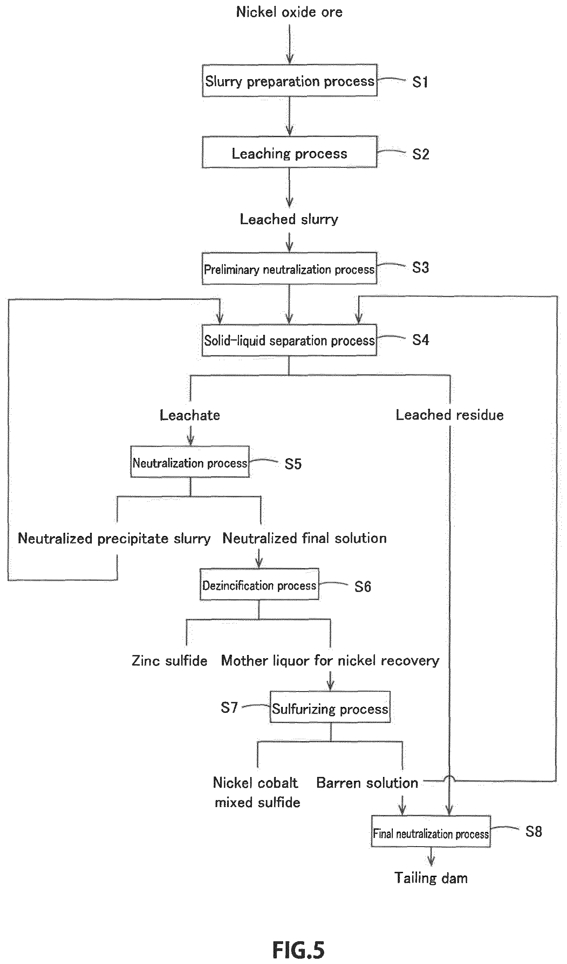

Fig. 1 is a simple flow chart for explaining a process for producing a nickel/cobalt mixed sulfide from low grade nickel oxide ore, as a technical premise of the present invention. In addition, Fig. 5 is a flow chart for explaining the process of Fig. 1 in more detail. As illustrated in Figs. 1 and 5, a hydrometallurgical process including the present method is a hydrometallurgical process comprising: a slurry preparation process (S1); a high pressure acid leaching process (hereinafter, referred to as simply "leaching process") (S2); a preliminary neutralization process (S3); a solid-liquid separation process (S4); a neutralization process (S5); a dezincification process (S6); a sulfurizing process (S7); and a final neutralization process (S8). The present invention is having the leaching process (S2) by HPAL method as technical premise, and the present invention is a dezincification method of a mixed nickel/cobalt sulfate aqueous solution capable of maintaining a zinc grade in a nickel/cobalt mixed sulfide stably low, especially in the dezincification process (S6).

In the slurry preparation process (S1), few types of nickel oxide ores are mixed, and then, mixed with water and classified to prepare ore slurry. In the leaching process (S2), sulfuric acid is added to the obtained slurry of nickel oxide ore and a leaching treatment is performed at high temperature and under high pressure. In the preliminary neutralization process (S3), pH of leached slurry obtained in the leaching process (S2) is adjusted in a predetermined range. In the solid-liquid separation process (S4), a residue is separated while washing pH adjusted leached slurry in multi-stages, and a leachate containing nickel and cobalt together with impurity elements is obtained.

In the neutralization process (S5), pH of the leachate solid-liquid separated in the solid-liquid separation process (S4) is adjusted, and a neutralized precipitate containing impurity elements is separated to obtain a neutralized final solution containing nickel and cobalt together with zinc. In the dezincification process (S6), a zinc sulfide is produced by adding a sulfurizing agent such as a hydrogen sulfide gas to the neutralized final solution, and the zinc sulfide is separated and removed to obtain a mother liquor for nickel recovery containing nickel and cobalt.

In the sulfurizing process (S7), a mixed sulfide containing nickel and cobalt is formed by adding the sulfurizing agent to the mother liquor for nickel recovery. In the final neutralization process (S8), a leached residue containing free sulfuric acid transferred from the solid-liquid separation process (S4) and a filtrate (barren solution) containing impurities such as magnesium, aluminum, iron and the like transferred from the sulfurizing process (S7) are neutralized. In addition, about detail of each process, it will be explained later using Fig. 5.

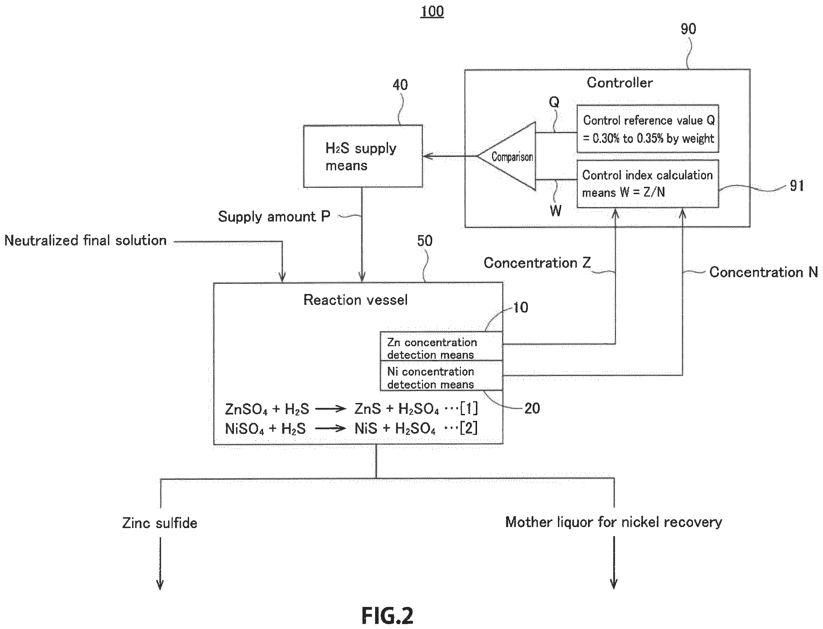

Fig. 2 is a block diagram for explaining a dezincification system of a nickel sulfate aqueous solution (present system) relating to one embodiment of the present invention. The present system 100 illustrated in Fig. 2 efficiently performs a dezincification of a mixed nickel/cobalt sulfate aqueous solution by removing zinc from a sulfuric acid aqueous solution containing nickel and cobalt by using a hydrogen sulfide gas. The present system 100 comprises a reaction vessel 50, a hydrogen sulfide supply means 40, a zinc concentration detection means 10, a nickel concentration detection means 20, and a controller 90, and performs a treatment of the dezincification process (S6). In addition, about the zinc concentration detection means 10 and the nickel concentration detection means 20, it is possible to use, for example ICP emission spectrometry or atomic absorption spectrometry.

The mixed nickel/cobalt sulfate aqueous solution is introduced in the reaction vessel 50, into which the hydrogen sulfide gas is blown, and a zinc sulfide (ZnS) after the treatment of the dezincification process (S6) and a mother liquor for nickel recovery are discharged from the reaction vessel 50. The hydrogen sulfide supply means 40 supplies the hydrogen sulfide gas to the reaction vessel 50 such that appropriate amount of the hydrogen sulfide gas is blown into the reaction vessel 50. The zinc concentration detection means 10 measures a zinc concentration Z contained in the sulfuric acid aqueous solution. The nickel concentration detection means 20 measures a nickel concentration N contained in the sulfuric acid aqueous solution. The controller 90 controls the hydrogen sulfide supply means 40 to adjust a flow rate P of the hydrogen sulfide gas supplied to the sulfuric acid aqueous solution.

The controller 90 further comprises a control index calculation means 91. This control index calculation means 91 calculates a ratio of the zinc concentration Z contained in the sulfuric acid aqueous solution with respect to the nickel concentration N contained in the sulfuric acid aqueous solution as a control index $W=Z/N$. The controller 90 adjusts the control index W calculated by the control index calculation means 91 to be maintained within a control reference value $(Q1 \leqq W \leqq Q2)$. In other words, the controller 90 controls the hydrogen sulfide supply means 40 such that the control index will be $W=Z/N=Q=(0.30\%$ to $0.35\%$ by weight), and adjusts an amount P of the hydrogen sulfide gas supplied to the sulfuric acid aqueous solution appropriately.

The present system 100 and the present method solves a problem that it was inevitable to generate a considerable amount of nickel loss, as a result of thoroughly performing quality control to decrease a defect rate of product with respect to a zinc grade in a conventional quality control system. Concretely, it improves a circumstance that, in the dezincification process in a process for producing the nickel/cobalt mixed sulfide from low grade nickel oxide ore, even if a zinc concentration in the sulfuric acid aqueous solution which will be a cause of defect is in a level that it will not be a problem, excessive amount of the hydrogen sulfide gas exceeding minimum necessary amount for removing zinc was blown into the sulfuric acid aqueous solution usually.

In a conventional quality control system, there was a defect that, by the hydrogen sulfide gas blown in excessively, nickel to be recovered is also removed together with zinc. This is because, when an absolute amount of zinc contained in the sulfuric acid aqueous solution is increased, an increased amount of the hydrogen sulfide gas is blown in correspondingly. In the present system 100 and the present method, when the nickel concentration N in the sulfuric acid aqueous solution to compensate for zinc is detected, it is possible to inhibit an amount of the hydrogen sulfide gas to be blown in.

At this time, an amount of the hydrogen sulfide gas to be blown in is inhibited, and an absolute amount of zinc to be removed, in other words, an absolute amount dezincification is decreased, and even a value of the zinc concentration Z is still high, when the nickel concentration N to compensate for zinc is assured, it will be possible to maintain an acceptable level of a zinc grade of a product intended. From this, a nickel loss is inhibited by the controller 90 controlling the hydrogen sulfide supply means 40 such that the control index will be W=Z/N=Q=(0.30% to 0.35% by weight), and adjusting an amount P of the hydrogen sulfide gas supplied to the sulfuric acid aqueous solution appropriately.

The purpose of the present system 100 and the present method are as follow. Firstly, to increase recovery efficiency of valuable metals from low grade nickel oxide ore. Especially, to inhibit a nickel loss. Secondly, to control a zinc grade in the product of nickel/cobalt mixed sulfide more stably. Thereby, in one embodiment of the present invention, a ratio of a zinc concentration with respect to a nickel concentration in the mixed nickel/cobalt sulfate aqueous solution is set to 0.30% to 0.35% by weight. Thus, a zinc grade in the product of nickel/cobalt mixed sulfide is maintained in a range of standard ($\leqq$ 250 ppm by weight).

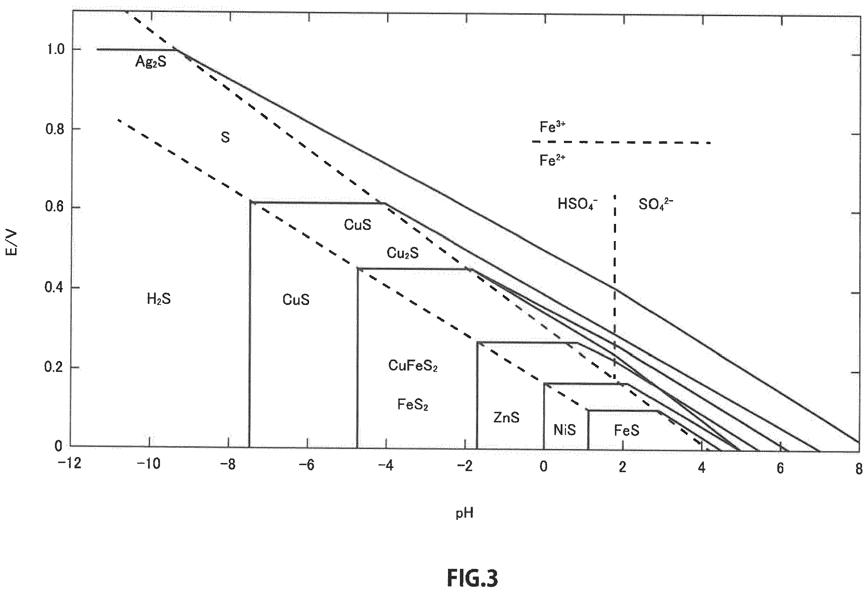

As a result, a nickel loss is inhibited. The reason is as explained in below using Fig. 3. In addition, when Zn/Ni=0.30% to 0.35% by weight, Ni grade of the product is about 50% by weight, so according to calculation, a zinc grade will be 1500 to 1750 ppm by weight, but in a filtrate after passing through a filter after a dezincification reaction, a zinc concentration is decreased to one digit. It is assumed that this phenomenon occurs as substitution reaction of FeS and NiS in a sulfide precipitate and zinc ions in the solution progresses.

Fig. 3 is a potential-pH diagram of M-S-$H_2$O system for explaining an easiness to produce a metal sulfide with respect to a reducing atmosphere. In addition, a source of reference of this drawing is metal chemistry introduction series 3, "Extractive Metallurgy" (The Japan Institute of Metals). A horizontal axis of a graph illustrated in Fig. 3 indicates pH of an aqueous solution, and a vertical axis indicates oxidizing and reducing potential of the aqueous solution. The hydrogen sulfide (H2S) gas produces the metal sulfide in association with a strong reducing action with respect to metal ions in the aqueous solution to be contacted with the hydrogen sulfide gas.

In main metal ions, it tends to be precipitated and removed as sulfide in an order of $Cu^{2+}$, $Cd^{2+}$, $Pb^{2+}$, $Sn^{2+}$, $Zn^{2+}$, $Co^{2+}$, $Ni^{2+}$, $Fe^{2+}$, and $Mn^{2+}$. Formulas [1] and [2] below indicate sulfurizing reactions of Zn and Ni by hydrogen sulfides, but the formulas [1] and [2] are reactions for producing hydrogen ions, so the reactions progress more as pH is higher. In other words, when comparing Zn and Ni, Zn tends to produce a sulfide with lower pH. According to Fig. 3, when Ni aqueous solution containing Zn as impurity is contacted with the hydrogen sulfide gas in a condition of pH2, ZnS is produced in association with a decrease of oxidizing and reducing potential, but when oxidizing and reducing potential is decreased excessively, it is understood that NiS is also produced. Thus, excess supply of the hydrogen sulfide gas causes an increase of nickel loss.

$$ZnSO_4 + H_2S \rightarrow ZnS + H_2SO_4 \cdots \qquad [1]$$

$$NiSO_4 + H_2S \rightarrow NiS + H_2SO_4 \cdots \qquad [2]$$

In addition, a fluctuation of a zinc concentration Z and a nickel concentration N of a neutralized final solution, i.e. a dezincification starting solution, tends to be mostly linked with each other. In other words, when the zinc concentration Z is increased, the nickel concentration N is also increased in conjunction with the increase of the zinc concentration Z. At this time, about a zinc grade of the product, a standard quality level can be regarded as an infinitesimal amount of zinc with respect to an amount of nickel which is main component contained about 50% by weight. Therefore, when both of nickel amount and zinc amount are increased, even if the zinc concentration Z is increased, zinc amount with respect to nickel amount does not increase rapidly, so it is often not always necessary to rapidly increase a flow rate of $H_2$S.

Therefore, in order to decrease a nickel loss, it is effective to control a zinc grade in the product appropriately with little fluctuation, without decreasing a zinc grade excessively. From this reason, a nickel loss is inhibited when a zinc grade in the product of nickel/cobalt mixed sulfide is maintained in a level which will not be an excessive quality in a range of standard ($\leqq$ 250 ppm by weight), for example about 150 ppm by weight.

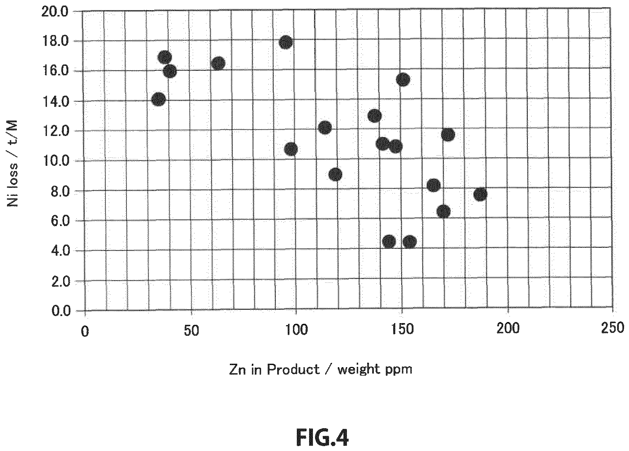

Fig. 4 is a graph illustrating a relation of nickel loss with respect to a zinc grade in a nickel/cobalt mixed sulfide obtained in the process of Fig. 1. A horizontal axis of a graph illustrated in Fig. 4 indicates a zinc grade (ppm by weight) in the product of nickel/cobalt mixed sulfide, and a vertical axis indicates a nickel loss (t/month).

From Fig. 4, it can be assumed that, in conventional quality control, hydrogen sulfide is supplied such that a zinc concentration of a mother liquor for nickel recovery, i.e. a dezincification final solution in the dezincification process will be a reference value or less, so a zinc grade in the product will be over a reference value, if the reference value is not set based on a minimum value of nickel concentration in the dezincification starting solution which will be fluctuated to some degree. As a result, a fluctuation of a zinc grade in the product will be large, and the product with excessive quality in which a zinc grade is significantly lower than the acceptable reference value of 250 ppm by weight, for example 50 ppm by weight has been produced. In that case, a nickel loss will be increased, so it is not preferable in view of nickel recovery efficiency. Here, about a zinc grade, a good production efficiency is obtained by maintaining a zinc grade to about 150 ppm by weight stably. As mentioned above, the present system 100 and the present method aim a quality control to obtain a good production efficiency with predetermined quality level by avoiding excessive quality.

In a hydrometallurgical process of nickel oxide ore relating to the present method, at first, nickel oxide ores arc high pressure acid leached (HPAL) by using sulfuric acid (S2). By the HPAL (S2), a sulfuric acid aqueous solution containing nickel and cobalt is obtained. Zinc is removed from obtained mixed nickel/cobalt sulfate aqueous solution by using a hydrogen sulfide gas (S6). In the dezincification process (S6), the hydrogen sulfide ($H_2S$) gas is reacted with an infinitesimal amount of zinc contained in the mixed nickel/cobalt sulfate aqueous solution as a sulfurizing agent, and zinc is removed and recovered as zinc sulfide (ZnS) (refer to Figs. 1 and 5).

In addition, a ratio (Z/N) of a nickel concentration N contained in the mixed nickel/cobalt sulfate aqueous solution and a zinc concentration Z contained in the mixed nickel/cobalt sulfate aqueous solution is applied as a control index W. The control index W is maintained in a ratio of control reference value 0.30% to 0.35% by weight, by adjusting an amount of the hydrogen sulfide gas to be supplied to the sulfuric acid aqueous solution (refer to Fig. 2).

A supply amount of the hydrogen sulfide gas can be initially set, for example, by a following formula [3].

$$\text{Zn concentration of dezincification starting solution} * \text{flow rate of starting solution} *$$

$$\text{reaction equivalent} * \text{coefficient (correction value)} = \text{H}_2\text{S flow rate} \cdots [3]$$

After initial setting, the control index W calculated by the analyzed nickel concentration N and zinc concentration Z is fed back, and a supply amount of the hydrogen sulfide gas is adjusted such that the control index W will be maintained within a control reference value Q.

Thereby, a zinc grade in the product of nickel/cobalt mixed sulfide is maintained in a range of standard ($\leqq$ 250 ppm by weight), and also, a variation of zinc grade in the product is decreased, so a production of the product with extremely low zinc grade is prevented. As a result, a nickel loss is decreased.

Fig. 5 is a flow chart for explaining the process of Fig. 1 in more detail. As illustrated also in Fig. 1, this hydrometallurgical process of nickel oxide ore is a hydrometallurgical process comprising the slurry preparation process (S1) to the final neutralization process (S8). Especially, the present system and the present method maintain a zinc grade in a nickel/cobalt mixed sulfide stably low, in the dezincification process (S6). About a control method in the dezincification process (S6), a conventional example is indicated as a comparative example 1, and examples 1 to 4 relating to one embodiment of the present invention are listed, and it is described about a performance of these examples later.

<Slurry preparation process>

In a slurry preparation process (S1), few types of nickel oxide ores are mixed to be a predetermined Ni grade and impurity grade, by using the nickel oxide ores which are raw material ores, and the nickel oxide ores are mixed with water to be a slurry, and sieved to be classified at a predetermined classification point to removed oversized ore particles, and then, only undersized ores are used.

The nickel oxide ores used in the slurry preparation process (S1) are so-called laterite ores such as limonite ores and saprolite ores mainly. A nickel content of the laterite ores is normally 0.8% to 2.5% by weight, and nickel is contained as hydroxide or magnesia silicate (magnesium silicate) mineral. In addition, an iron content is 10% to 50% by weight, and it is in a shape of trivalent hydroxide (goethite), but partially, bivalent iron is contained in magnesia silicate mineral. As the nickel oxide ores used in this slurry preparation process (S1), in addition to such laterite ores, oxide ores containing valuable metals such as nickel, cobalt, manganese and copper, for example manganese nodules present at a bottom of deep sea, may be used.

About a classification method of the nickel oxide ores, it is not limited particularly as long as it can classify ores based on a desired particle size, and for example, it can be performed by sieving using a general vibration sieve. Further, also about its classification point, it is not limited particularly, and a classification point for obtaining ore slurry composed of ore particles with desired particle size value or less can be set accordingly.

<Leaching process>

In a leaching process (S2), with respect to the nickel oxide ores, a leaching treatment is performed using the HPAL method. Concretely, sulfuric acid is added to the ore slurry obtained by crushing the nickel oxide ores which are raw material, and nickel, cobalt and the like are leached from the ores by pressurizing under high temperature condition of 220°C to 280°C, for example, by using high temperature pressurizing vessel (autoclave), to form a leached slurry composed of a leachate and a leached residue.

In the leaching treatment in this leaching process (S2), a leaching reaction and a high temperature hydrolysis reaction occur, and a leaching of nickel, cobalt and the like as sulfate, and a fixation of leached iron sulfate as hematite are performed. However, a fixation of iron ions does not progress completely, so normally, in a liquid part of obtained leached slurry, bivalent and trivalent iron ions are contained in addition to nickel, cobalt and the like.

As an addition amount of sulfuric acid in the leaching process (S2), it is not limited particularly, and an excess amount such that irons in the ores will be leached is used. In addition, in the leaching process (S2), from a point of view of solid-liquid separation property of a leached residue containing hematite produced in a following process of solid-liquid separation process (S4), it is preferable that pH of obtained leachate is adjusted to be 0.1 to 1.0.

<Preliminary neutralization process>

In a preliminary neutralization process (S3), pH of the leached slurry obtained in the leaching process (S2) is adjusted in a predetermined range. In the leaching process (S2) for performing the leaching treatment by the HPAL method, excess sulfuric acid is added from a point of view of improving a leaching rate. Therefore, excess sulfuric acid which were not involved in a leaching reaction is contained in the obtained leached slurry, so its pH is extremely low. From this, in the preliminary neutralization process (S3), pH of the leached slurry is adjusted to a predetermined range such that washing will be performed efficiently at the time of washing in multi-stages in the next process of solid-liquid separation process (S4).

Concretely, the leached slurry used in the solid-liquid separation process (S4) is adjusted of its pH to about 2 to 6, preferably 2.5 to 3.4. When pH is less than 2, a cost for making equipment of following processes to be acid resistant will be necessary. On the other hand, when pH is more than 6, nickel leached in the leachate (slurry) precipitates in the process of washing, and resides as a residue, so a nickel recovery rate may be decreased, and also, a washing efficiency may be decreased.

<Solid-liquid separation process>

In a solid-liquid separation process (S4), the leached slurry adjusted of its pH in the preliminary neutralization process (S3) is washed in multi-stages, and a leached residue and a leachate containing zinc as impurity element in addition to nickel and cobalt is obtained.

In the solid-liquid separation process (S4), after mixing the leached slurry with a washing liquid, a solid-liquid separation treatment is performed by arranging thickeners in multi-stages as a solid-liquid separation device. Concretely, at first, the leached slurry is diluted by the washing liquid, and then, the leached residue in the slurry is condensed as precipitate of the thickeners. Thereby, a nickel amount adhered to the leached residue is decreased according to a degree of its dilution. In addition, it is intended to improve a recovery rate of nickel and cobalt, by using and connecting such thickeners in multi-stages.

As a multi-stage washing method in the solid-liquid separation process (S4), a counter current decantation (CCD) method to contact a washing liquid not containing nickel as countercurrent is used. Thereby, it is possible to eliminate a washing liquid newly introduced into the system, and also, a recovery rate of nickel and cobalt is improved.

As the washing liquid, it is not limited particularly, but a washing liquid which does not contain nickel and does not affect the process may be used. Among them, it is preferable to use an aqueous solution having pH of 1 to 3. When pH of the washing liquid is high, bulky aluminum hydroxide is produced when aluminum is contained in the leachate, and it will be a cause of defect in precipitation of the leached residue in the thickeners. From this, as the washing liquid, it is preferable to repeatedly use a barren solution of low pH (pH is about 1 to 3) obtained in a following process of sulfuring process (S7).

<Neutralization process>

In a neutralization process (S5), pH of the leachate separated in the solid-liquid separation process (S4) is adjusted, and a neutralized precipitate containing impurity elements is separated to obtain a neutralized final solution containing zinc together with nickel and cobalt. More concretely, it is as described in below.

In the neutralization process (S5), while inhibiting oxidization of separated leachate, the neutralized final solution which will be a source of mother liquor for nickel recovery, and a neutralized precipitate slurry containing trivalent iron as impurity elements are formed. In the neutralization process (S5), a neutralizing agent such as calcium carbonate is added to the leachate. An addition amount of the neutralizing agent is adjusted such that pH of the neutralized final solution obtained by neutralization will be 4 or less, preferably 3.0 to 3.5, more preferably 3.1 to 3.2.

In the neutralization process (S5), by performing such neutralization treatment to the leachate, excess acid used in the leaching treatment by the HPAL method is neutralized, and the neutralized final solution which will be a source of mother liquor for nickel recovery is produced. Here, at the same time of production of the neutralized final solution, impurities are removed as the neutralized precipitate. In this neutralized precipitate, impurities such as aluminum ions or trivalent iron ions remaining in the solution are formed as hydroxide. This neutralized precipitate may be returned to the solid-liquid separation process (S4) again.

<Dezincification process>

In a dezincification process (S6), zinc sulfide is formed by performing a sulfurizing treatment by adding a sulfurizing agent such as a hydrogen sulfide gas to the neutralized final solution obtained from the neutralization process (S5), and the zinc sulfide is separated and removed to obtain a mother liquor for nickel recovery (dezincification final solution) containing nickel and cobalt. More concretely, it is as described in below.

For example, the neutralized final solution containing zinc together with nickel and cobalt is introduced into a pressurized vessel, and by blowing the hydrogen sulfide gas into a gas phase, zinc is selectively sulfurized with respect to nickel and cobalt, and zinc sulfide and the mother liquor for nickel recovery are produced.

<Sulfurizing Process>

In a sulfurizing process (S7), with respect to the mother liquor for nickel recovery, a nickel/cobalt mixed sulfide with low impurity components, and a barren solution in which concentrations of nickel and cobalt are stably maintained in low level are produced. Here, the dezincification final solution which is the mother liquor for nickel recovery will be a sulfurizing reaction starting solution, and a sulfurizing reaction is generated by blowing the hydrogen sulfide gas into the sulfurizing reaction starting solution as a sulfurizing agent to produce the nickel/cobalt mixed sulfide and the barren solution.

A sulfurizing treatment in the sulfurizing process (S7) can be performed using a sulfurizing reaction tank and the like, and with respect to the sulfurizing reaction starting solution charged into the sulfurizing reaction tank, the hydrogen sulfide gas is blown into a gas phase in the sulfurizing reaction tank, and a sulfurizing reaction is generated by dissolving the hydrogen sulfide gas in the solution.

By this sulfurizing treatment, nickel and cobalt contained in the sulfurizing reaction starting solution are fixed as mixed sulfide. After the end of sulfurizing reaction, a slurry containing obtained nickel and cobalt mixed sulfide is charged into the solid-liquid separation device such as thickeners to perform a sedimentation treatment, and only the mixed sulfide is separated and recovered from a bottom of the thickeners.

In addition, a component of aqueous solution separated via the sulfurizing process (S7) is recovered as the barren solution by overflowing the barren solution from a top of the thickeners. The recovered barren solution is a solution with extremely low concentration of valuable metals such as nickel, and contains impurity elements such as manganese, magnesium, and iron remained without sulfurizing. This barren solution will be transferred to a final neutralization process (S8) to be detoxified. Or, it may be returned to the solid-liquid separation process (S4) to be used for nickel recovery again.

<Final neutralization process>

In a final neutralization process (S8), the leached residue containing free sulfuric acid transferred from the solid-liquid separation process (S4) and a filtrate (barren solution) containing impurities such as magnesium, aluminum, and iron transferred from the sulfurizing process (S7) are neutralized. The final neutralization process (S8) is a neutralization performed for wasting slurry from the hydrometallurgical process to outside, and it is a neutralization process performed at a last of the hydrometallurgical process.

The leached residue and the filtrate are adjusted to a predetermined pH range by a neutralizing agent to be a waste slurry (tailing). The tailing produced in this reaction tank is transferred to a tailing dam (waste storage site).

Concretely, in the final neutralization process (S8), free sulfuric acid contained in the leached residue is neutralized completely, and impurities contained in the filtrate is fixed as hydroxide, and a slurry containing impurities of hydroxide is discharged to the tailing dam.

Examples

Hereinafter, explaining about a control method in the dezincification process (S6), by citing a conventional example as comparative example 1, and by citing examples 1 to 4 relating to one embodiment of the present invention, and by explaining about performances of these examples.

[Comparative example 1]

When a dezincification process was controlled by only using a zinc concentration as a control index conventionally and generally, a variation (standard deviation σ) of zinc grade of the product of nickel/cobalt mixed sulfide was 35 ppm by weight.

[Example 1]

When a dezincification process was controlled by using a ratio of a zinc concentration with respect to a nickel concentration in a mixed nickel/cobalt sulfate aqueous solution as a control index, a variation (standard deviation σ) of zinc grade of a nickel/cobalt mixed sulfide during three months was 29 ppm by weight. A performance of the example 1 with respect to the comparative example 1 is indicated in table 1.

Table 1 is a table indicating a variation of zinc grade with respect to a distinction of control in the dezincification process by a standard deviation σ. In more detail, an upper stage of table 1 indicates a case controlled by only using a zinc concentration as a control index, by conventional controlling method, and a lower stage of table 1 indicates a case controlled by using a ratio of a zinc concentration with respect to a nickel concentration as a control index, by a controlling method of the present method, and a value of variation of zinc grade in the nickel/cobalt mixed sulfide in each case is indicated by a standard variation σ.

[Table 1]

| Distinction of control / Standard deviation σ | | Variaiton of zinc grade in nickel cobalt sulfide |
|---|---|---|
| Comparative example 1 | Control by zinc concentration | 35 ppm by weight [ × ] |
| Example 1 | Control by concentration ratio of zinc and nickel | 29 ppm by weight [ ○ ] |

A result of the example 1 with respect to the comparative example 1 is as indicated in table 1, and the example 1 with a circle mark is better than the comparative example with a cross mark.

[Example 2]

When a ratio of a zinc concentration with respect to a nickel concentration in the mixed nickel/cobalt sulfate aqueous solution was controlled to be 0.25% to 0.30% by weight for one month, by using same control index as the example 1, an average value of zinc grade of the nickel/cobalt mixed sulfide was 132 ppm by weight, an acceptance rate of zinc was 100%, and a nickel loss was 10.7 t/month.

[Example 3]

When a ratio of a zinc concentration with respect to a nickel concentration in the mixed nickel/cobalt sulfate aqueous solution was controlled to be 0.30% to 0.35% by weight for one month, by using same control index as the examples 1 and 2, an average value of zinc grade of the nickel/cobalt mixed sulfide was 152 ppm by weight, an acceptance rate of zinc was 100%, and a nickel loss was 9.6 t/month.

[Example 4]

When a ratio of a zinc concentration with respect to a nickel concentration in the mixed nickel/cobalt sulfate aqueous solution was controlled to be 0.35% to 0.40% by weight for one month, by using same control index as the examples 1 and 2, an average value of zinc grade of the nickel/cobalt mixed sulfide was 171 ppm by weight, an acceptance rate of zinc was 98%, and a nickel loss was 8.4 t/month. The average value was 171 ppm by weight and it was in a range of standard ($\leqq$ 250 ppm by weight), but a rejection rate deviating from a range of standard was 2%, so a result of the example 4 was not acceptable.

Results of the examples 2 to 4 are indicated in table 2. Table 2 is a table indicating a relation of the average value of zinc grade, the acceptance rate of zinc grade, and an amount of nickel loss, when they were controlled by setting three types of control reference values, by using a ratio of a zinc concentration with respect to a nickel concentration as a control index as same as the example 1 indicated in the lower stage of table 1.

[Table 2]

| | Ratio of zinc concentration with respect to nickel concentration [% by weight] | Average value of zinc grade in nickel cobalt sulfide [ppm by weight] | Acceptance rate of zinc grade in nickel cobalt sulfide [%] | Amount of nickel loss [t/ month] |
|---|---|---|---|---|
| Example 2 | 0.25~0.30 | 132 | 100 [○] | 10.7 [×] |
| Example 3 | 0.30~0.35 | 152 | 100 [○] | 9.6 [○] |
| Example 4 | 0.35~0.40 | 171 | 98 [×] | 8.4 [○] |

The performances of the examples 2 to 4 were as indicated in table 2. At first, about the acceptance rate, circle marks were given to the examples 2 and 3, but a cross mark was given to the example 4. Next, about the nickel loss, circle marks were given to the examples 3 and 4, but a cross mark was given to the example 2. As a result, the example 3 was given circle marks to both of the acceptance rate and the nickel loss. On the other hand, the examples 2 and 4 were given a cross mark to either of the nickel loss or the acceptance rate. Therefore, it was concluded that the example 3 is the best.

As indicated in the example 3 of table 2, it was understood that it is best to use a ratio of a zinc concentration with respect to a nickel concentration in the mixed nickel/cobalt sulfate aqueous solution as a control index, and to control the ratio to be 0.30% to 0.35% by weight. About the performance of the example 3, the average value of zinc grade of the nickel/cobalt mixed sulfide was 152 ppm by weight, the acceptance rate of zinc was 100%, and the nickel loss was 9.6 t/month. As such, according to the present invention, a dezincification system of a nickel sulfate aqueous solution capable of maintaining a zinc grade in a nickel/cobalt mixed sulfide to be stably low, and a method for same are provided.

In addition, about the fact that the average value of zinc grade of the example 3 was 152 ppm by weight, it is also confirmed that a variation of the average value is stable compared to the comparative example 1 by the example 1 using the same control index. As such, as it is stable with less variation, a problem that a zinc grade in the nickel/cobalt mixed sulfide changes and exceeds a control reference is solved. Further, as it will not decrease a zinc grade unnecessarily by excess addition of the hydrogen sulfide gas, a nickel loss is decreased. This means that a used amount of expensive hydrogen sulfide gas is also decreased. According to the present invention, a new control method capable of controlling a zinc grade in the nickel/cobalt mixed sulfide more stably is achieved.

In addition, it was explained in detail about one embodiment and each example of the present invention as the above, but it is easy for those who skilled in the art to understand that various modifications are possible without substantially departing from new matters and effects of the present invention. Therefore, all of such modified examples are included within the scope of the present invention.

For example, a term used at least once in the description or drawings together with a different term that is broader or the same in meaning can also be replaced by the different term in any place in the description or drawings. Further, the configurations of the dezincification system of the mixed nickel/cobalt sulfate aqueous solution are not limited to those described in one embodiment and each example of the present invention, but may be carried out in various modifications.

Glossary of Drawing References

10 Zinc concentration detection means
20 Nickel concentration detection means
40 Hydrogen sulfide supply means
50 Reaction vessel
90 Controller
91 Control index calculation means
100 Dezincification system of mixed nickel/cobalt sulfate aqueous solution (present system)
Z Zinc concentration (contained in sulfuric acid aqueous solution)
N Nickel concentration (contained in sulfuric acid aqueous solution)
P Supply amount of hydrogen sulfide gas (supplied to sulfuric acid aqueous solution)
Q Control reference value (of control index W)
S1 Slurry preparation process
S2 High pressure acid leaching (HPAL) process (leaching process)
S3 Preliminary neutralization process
S4 Solid-liquid separation process
S5 Neutralization process
S6 Dezincification process
S7 Sulfurizing process
S8 Final neutralization process

**Claims**

1. A dezincification system of a nickel sulfate aqueous solution for removing zinc from the nickel sulfate aqueous solution containing cobalt and zinc as impurity by using a hydrogen sulfide gas, comprising:

   a reaction vessel for storing the nickel sulfate aqueous solution;
   a hydrogen sulfide supply means for supplying the hydrogen sulfide gas to the reaction vessel;
   a zinc concentration detection means for measuring a zinc concentration (Z) contained in the nickel sulfate aqueous solution;
   a nickel concentration detection means for measuring a nickel concentration (N) contained in the nickel sulfate aqueous solution;
   a controller for controlling the hydrogen sulfide supply means to adjust an amount (P) of the hydrogen sulfide gas supplied to the reaction vessel,
   wherein the controller further comprises a control index calculation means for calculating a ratio of the zinc concentration (Z) contained in the nickel sulfate aqueous solution with respect to the nickel concentration (N) contained in the nickel sulfate aqueous solution as a control index (W=Z/N),
   the control index (W) calculated by the control index calculation means is adjusted to be maintained within a control reference value ($Q1 \leqq W \leqq Q2$).

2. The dezincification system of the nickel sulfate aqueous solution according to claim 1, wherein a control reference range of the control index (W=Z/N) is maintained to a ratio of 0.30% to 0.35% by weight.

3. A dezincification method of a nickel sulfate aqueous solution for removing zinc from the nickel sulfate aqueous solution containing cobalt and zinc as impurity, which is high pressure acid leached (HPAL) using sulfuric acid in a hydrometallurgical process of nickel oxide ore, by using a hydrogen sulfide gas,
   wherein a ratio of a zinc concentration (Z) contained in the nickel sulfate aqueous solution with respect to a nickel concentration (N) contained in the nickel sulfate aqueous solution is applied to a control index (W=Z/N), and
   the control index (W=Z/N) is maintained within a control reference value ($Q1 \leqq W \leqq Q2$) by adjusting an amount (P) of the hydrogen sulfide gas supplied to a reaction vessel.

4. The dezincification method of the nickel sulfate aqueous solution according to claim 3, wherein a control reference range of the control index (W=Z/N) is maintained to a ratio of 0.30% to 0.35% by weight.

Nickel oxide ore

↓

High pressure acid
leaching process — S2

↓

Preliminary neutralization
process — S3

↓

Solid-liquid separation
process — S4

↓

Neutralization process — S5

↓

Dezincification process — S6

↓

Sulfurizing process — S7

↓

Nickel cobalt mixed sulfide

FIG.1

**100**

**Controller** 90

H₂S supply means 40

$Q$

Control reference value Q = 0.30% to 0.35% by weight

Comparison

Control index calculation means $W = Z/N$ — 91

$W$

Supply amount P

Neutralized final solution

Concentration Z

Concentration N

Reaction vessel 50

10

Zn concentration detection means

Ni concentration detection means

20

$$ZnSO_4 + H_2S \longrightarrow ZnS + H_2SO_4 \cdots [1]$$
$$NiSO_4 + H_2S \longrightarrow NiS + H_2SO_4 \cdots [2]$$

Zinc sulfide

Mother liquor for nickel recovery

**FIG.2**

EP 3 715 487 A1

**FIG.3**

Zn in Product / weight ppm

**FIG.4**

Nickel oxide ore

↓

Slurry preparation process — S1

↓

Leaching process — S2

↓

Leached slurry

↓

Preliminary neutralization process — S3

↓

Solid-liquid separation process — S4

Leachate          Leached residue

↓

Neutralization process — S5

Neutralized precipitate slurry   Neutralized final solution

↓

Dezincification process — S6

Zinc sulfide   Mother liquor for nickel recovery

↓

S7 — Sulfurizing process

Nickel cobalt   Barren solution
mixed sulfide

↓

Final neutralization process — S8

↓

Tailing dam

## FIG.5

## INTERNATIONAL SEARCH REPORT

| International application No. |
| --- |
| PCT/JP2018/029091 |

A. CLASSIFICATION OF SUBJECT MATTER

Int.Cl. C22B23/00(2006.01)i, C22B3/08(2006.01)i, C22B3/44(2006.01)i

According to International Patent Classification (IPC) or to both national classification and IPC

B. FIELDS SEARCHED

Minimum documentation searched (classification system followed by classification symbols)

Int.Cl. C22B23/00, C22B3/08, C22B3/44

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

JSTPlus/JMEDPlus/JST7580 (JDreamIII)

C. DOCUMENTS CONSIDERED TO BE RELEVANT

| Category* | Citation of document, with indication, where appropriate, of the relevant passages | Relevant to claim No. |
| --- | --- | --- |
| A | JP 2013-185179 A (SUMITOMO METAL MINING CO., LTD.) 19 September 2013, claims, fig. 1-4 & US 2015/0023850 A1 & EP 2824202 A1 | 1-4 |
| A | JP 2002-121624 A (SUMITOMO METAL MINING CO., LTD.) 26 April 2002, claims (Family: none) | 1-4 |
| A | JP 2003-313617 A (SUMITOMO METAL MINING CO., LTD.) 06 November 2003, claims & US 2003/0173308 A1 | 1-4 |
| A | JP 2013-185178 A (SUMITOMO METAL MINING CO., LTD.) 19 September 2013, claims & US 2015/0023849 A1 & EP 2824203 A1 | 1-4 |

☐ Further documents are listed in the continuation of Box C.    ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 29 August 2018 (29.08.2018) | 11 September 2018 (11.09.2018) |

| Name and mailing address of the ISA/ Japan Patent Office 3-4-3, Kasumigaseki, Chiyoda-ku, Tokyo 100-8915, Japan | Authorized officer |
| --- | --- |
| | Telephone No. |

Form PCT/ISA/210 (second sheet) (January 2015)

**EP 3 715 487 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017226237 A
- JP 2013185178 A